**Europäisches Patentamt**

**European Patent Office**

**Office européen des brevets**

(19)

(11) Veröffentlichungsnummer: **0 118 033 B1**

(12) **EUROPÄISCHE PATENTSCHRIFT**

(45) Veröffentlichungstag der Patentschrift:
**27.08.86**

(51) Int. Cl.⁴: **B 65 G 61/00**

(21) Anmeldenummer: **84101055.6**

(22) Anmeldetag: **02.02.84**

(54) **Vorrichtung zum Be- und/oder Entpalettieren von Stückgütern.**

(30) Priorität: **05.02.83 DE 3303922**
**05.02.83 DE 3303923**

(43) Veröffentlichungstag der Anmeldung:
**12.09.84 Patentblatt 84/37**

(45) Bekanntmachung des Hinweises auf die Patenterteilung:
**27.08.86 Patentblatt 86/35**

(84) Benannte Vertragsstaaten:
**DE FR IT NL SE**

(56) Entgegenhaltungen:
**EP - A - 0 028 762**
**DE - A - 3 014 735**

(73) Patentinhaber: **Holstein & Kappert GmbH,**
**Juchostrasse 20, D-4600 Dortmund 1 (DE)**

(72) Erfinder: **Schulte, Lothar, Auf der Burg 13,**
**D-4600 Dortmund 13 (DE)**
Erfinder: **Kaspar, Wolfgang, Ing. grad.,**
**Friedrich-Ebert-Strasse 76, D-5830 Schwelm (DE)**
Erfinder: **Smusch, Günther, Ludgeristrasse 6,**
**D-4712 Werne (DE)**

## Beschreibung

Die Erfindung bezieht sich auf eine Vorrichtung zum Be- und/oder Entpalettieren von Stückgütern wie Kisten, Kartons, Fassgebinden und/oder Be- oder Entladen von Kästen, bestehend aus einer Sammel- und/oder Auflösestation sowie einer Palettenbe- und/oder Entladestation und zwischen diesen Stationen verfahrbaren Be- und/oder Entladeeinrichtungen.

Bei der Verwendung derartiger Maschinen als Be- oder Entpalettiermaschinen ist es bekannt, die Be- oder Entladeeinrichtungen an einem Wagen anzuordnen, der zwischen zwei Standsäulen in horizontaler Ebene zwischen den Sammelplätzen bzw. Abgabestationen verfahrbar ist. Der Wagen wird in Führungsschienen gehalten, die selbst bei entsprechend hoher Lastaufnahme ein einwandfreies Umsetzen mit Stückgütern gestatten. Nachteilig ist bei diesen Maschinen, dass durch die Eingliederung des in horizontaler Ebene verfahrbaren Wagens nicht alle Projektierungswünsche erfüllt werden können, da immer dann, wenn der Wagen im Bereich der Palettenbeladestation eine Stückgutlage abgesetzt hat, dieser zunächst aus diesem Bereich herausbewegt werden muss, bevor eine beladene Palette beispielsweise quer zur Beladerichtung bzw. Verfahrrichtung des Wagens entfernt werden kann. Hierdurch treten zeitliche Verzögerungen auf, die die Gesamtdurchsatzleistung einer solchen Maschine entsprechend verringern.

Um eine möglichst variable Projektierungsmöglichkeit bei solchen Maschinen anbieten zu können und andererseits weitere Einsparungen durch Verminderung der eigentlichen Abstützsäulen zu erzielen, ist man dazu übergegangen, derartige Palettiermaschinen als Einständermaschinen auszubilden. Eine der letzten Entwicklungen in dieser Richtung ist beispielsweise in der DE-A-2 740 519 niedergelegt. Hierbei handelt es sich um eine Maschine zum fortlaufenden Aufsetzen oder Abnehmen von Lagen von z.B. kasten- oder kistenartiger Gebinde, wobei zum horizontalen Bewegen des an einem Ausleger sitzenden Greiferkopfes die eigentliche Säule um eine vertikale Drehachse mittels eines Geradschubkurbelgetriebes um einen Drehwinkel in der Grössenordnung von 90° hin- und herverfahrbar ist. Bei einer solchen Maschine müssen zwangsläufig aufgrund der drehbaren Lagerung der lastaufnehmenden Säule erhebliche Anstrengungen bezüglich der Standfestigkeit einer solchen Maschine vorgenommen werden. Hinzu kommt, dass die notwendigen Antriebseinrichtungen entsprechend grossvolumig ausgelegt werden müssen, um die entsprechend hohen Lasten auch über einen längeren Zeitraum bewegen zu können. Darüber hinaus muss bei dieser bekannten Einständermaschine die Stückgutlage entlang einer kreisförmigen Bahn innerhalb eines Winkelbereichs von 90° verfahren werden, wodurch zusätzlich zu den Beschleunigungs- und Verzögerungsmomenten weitere Zentrifugalmomente die Horizontalfahrt einer jeden Stückgutlage nachteilig beeinflussen.

Ferner ist aus der EP-A-28 762 eine Maschine zum Beschicken von nachgeordneten Flaschenbehandlungsmaschinen bekannt. Bei dieser Maschine verfährt ein Schlitten in horizontaler Ebene und übernimmt an der Entnahmestelle eine Reihe der dort bereitgestellten Flaschen und übergibt sie mittels einer Schwenkeinrichtung an einen Hochleistungstransporteur. Der Schlitten ist dabei an einer Stützsäule befestigt. Hierbei handelt es sich um eine Maschine, die aufgrund ihrer Auslegung zum Umsetzen von Flaschen vorgesehen ist. Die der Erfindung zugrundeliegende Aufgabe ist mit dieser Vorrichtung nicht zu lösen.

Die Erfindung hat sich nun unter Vermeidung der aufgezeigten Nachteile die Aufgabe gestellt, eine Einständer- bzw. Einsäulenmaschine zu schaffen, wobei diese Säule ortsfest angeordnet sein soll und unabhängig von deren Stellung bzw. Positionierung zu den einzelnen Stell- und Umsetzplätzen eine einwandfreie Umsetzarbeit der Be- und/oder Entladeeinrichtung sichergestellt sein soll, ohne dass wesentliche zusätzliche Momente die eigentliche Bewegungsfahrt stören. Auch soll eine exakte Bewegung der jeweils aufzunehmenden Stückgüter von Endlage zu Endlage mit einfachen Mitteln geschaffen werden. Dabei soll gleichzeitig die Möglichkeit gegeben sein, sowohl Be- als auch Entpalettiermaschine bzw. Ein- und Auspackmaschine getrennt voneinander an der Säule arbeiten zu lassen.

Diese der Erfindung zugrundeliegende Aufgabe ist bei einer Vorrichtung der im Oberbegriff des Anspruchs 1 genannten Art (DE-A-2 740 519) dadurch gelöst, dass:
— die Hauptsäule unbeweglich ist,
— an dem Hubgerüst in gleicher horizontaler Ebene auf Abstand zwei Lagerstellen für zwei parallel und horizontal verschwenkbare Ausleger vorhanden sind,
— eine die eigentliche Greifereinrichtung aufnehmende Traverse an den von den Lagerstellen abweisenden Enden der beiden Ausleger derart drehbar gelagert ist, dass eine Parallelführung der Traverse sichergestellt ist,
— an dem Hubgerüst in der Mitte zwischen den Lagerstellen ein Kurbelantrieb gelagert ist, dessen Kurbel in einer lotrecht zur Traverse verlaufenden Führung eingreift.

Mit dieser erfindungsgemässen Lösung wird die gestellte Aufgabe in hervorragender Weise gelöst, ohne dass eine Verdrehung des eigentlichen Maschinenständers bzw. der Hauptsäule erforderlich wird. Darüber hinaus sind ideale Beschleunigungs- und Verzögerungswerte sowie exakte Endlagenbestimmungen gegeben.

Überdies ist praktisch mit nur einem schwenkbaren Ausleger bei ortsfester Hauptsäule bzw. einem ortsfesten Ständer mit in vertikaler Ebene bewegbaren Hubgerüst eine exakte Endlagenbestimmung mit äusserst geringem Aufwand sichergestellt. Zur Bewegung der kompletten Last ist lediglich ein Hauptausleger notwendig, der durch Hilfsausleger oder anderweitige Getriebezuordnungen eine Parallelverschiebung der eigentlichen Haltetraverse und damit der aufgenommenen Last sicherstellt. Anstelle der im Oberbegriff benannten Be- und/oder Entladeeinrichtung für Stückgüter kann diese Vorrichtung selbstverständlich auch zum Ein- oder Auspacken von Stückgütern wie Kisten und dgl. mit den gleichen Vorteilen Verwendung finden.

Bei der Verwendung der erfindungsgemässen Merkmale als Einzelmaschine ist erfindungsgemäss die stationäre Hauptsäule nur einseitig mit einem Hubgerüst und daran gelagerten drehbaren Auslegern ausgestattet.

Erfindungsgemäss ist zwischen den beiden auf Abstand angeordneten Lagerstellen der Ausleger ein Kurbelantrieb gelagert, dessen Kurbel in einer lotrecht zur Traverse verlaufenden Führung eingreift und vorzugsweise innerhalb eines Schwenkbereiches von 180° die jeweiligen Endlagen der Traversenverschiebung bestimmt. Hierdurch ergeben sich weitere wesentliche Vorteile, die insbesondere darin zu sehen sind, dass bei Verschwenkung der Traverse die Führung des Kurbelzapfens wegrückt und somit eine nahezu optimale Beschleunigung und Verzögerung gewährleistet ist, die sich durch besonders langsame Anfahr- und Endgeschwindigkeiten auszeichnet. Schliesslich weisen die Ausleger vorzugsweise gleiche Lastaufnahmeparameter auf, wobei die eigentliche Be- oder Entladeeinrichtung an wahlweise zwei Zentrierpunkten der Traverse ankuppelbar ist, derart, dass bei symetrischer Anordnung des Auslegersystems zur eigentlichen Hauptsäule eine Links- bzw. Rechtsausführung mit entsprechend zugeordneten Paletten- und/oder Stückgutfahrwegen unter Verwendung leichter Bauelemente wählbar ist.

Hierdurch ist der Vorteil gegeben, dass insbesondere bei schwierigen Projekten praktisch mit einer Maschine jede beliebige Variationsmöglichkeit ohne zusätzliche Elemente zur Verfügung steht.

Weitere Merkmale ergeben sich aus den verbleibenden Unteransprüchen.

In der nachfolgenden Beschreibung, die auf ein in der Zeichnung dargestelltes Ausführungsbeispiel Bezug nimmt, wird die Erfindung näher erläutert.

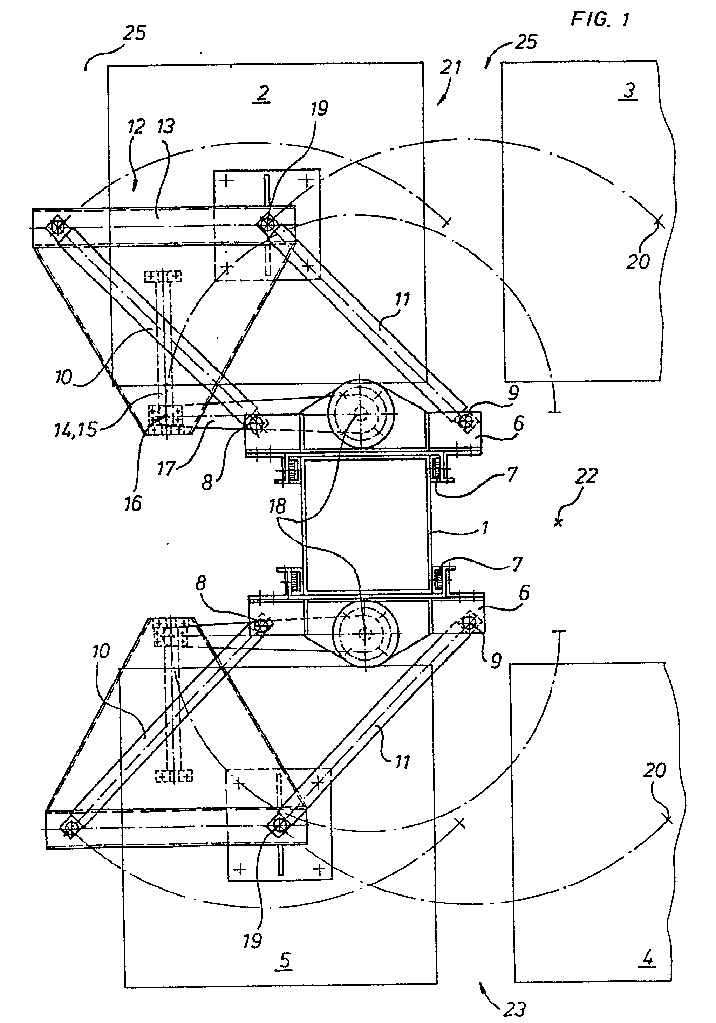

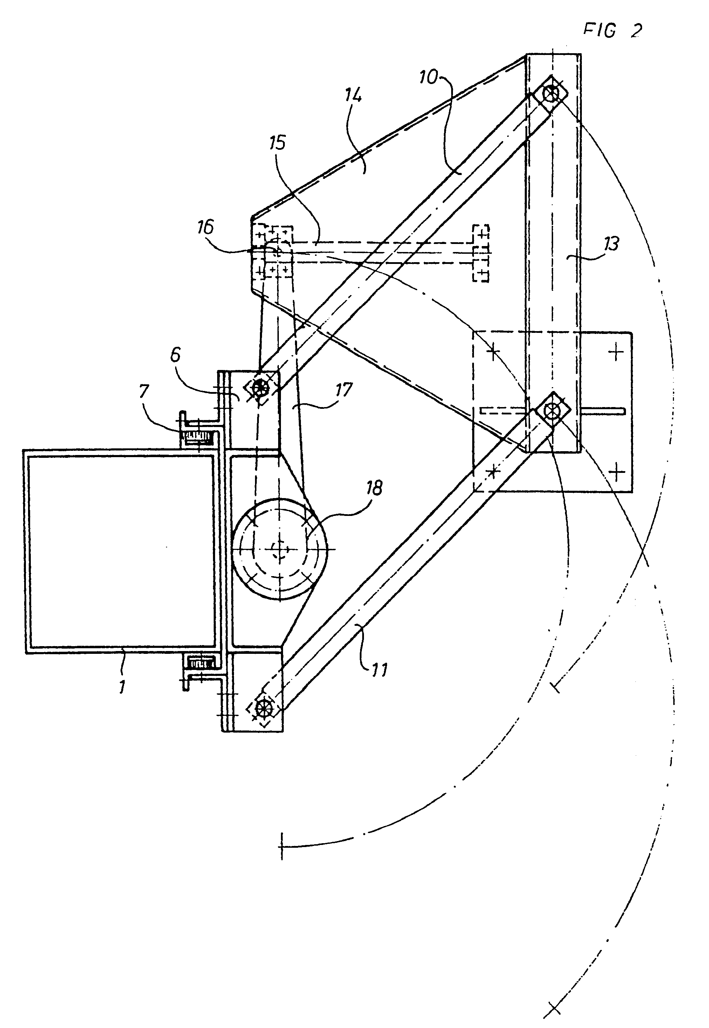

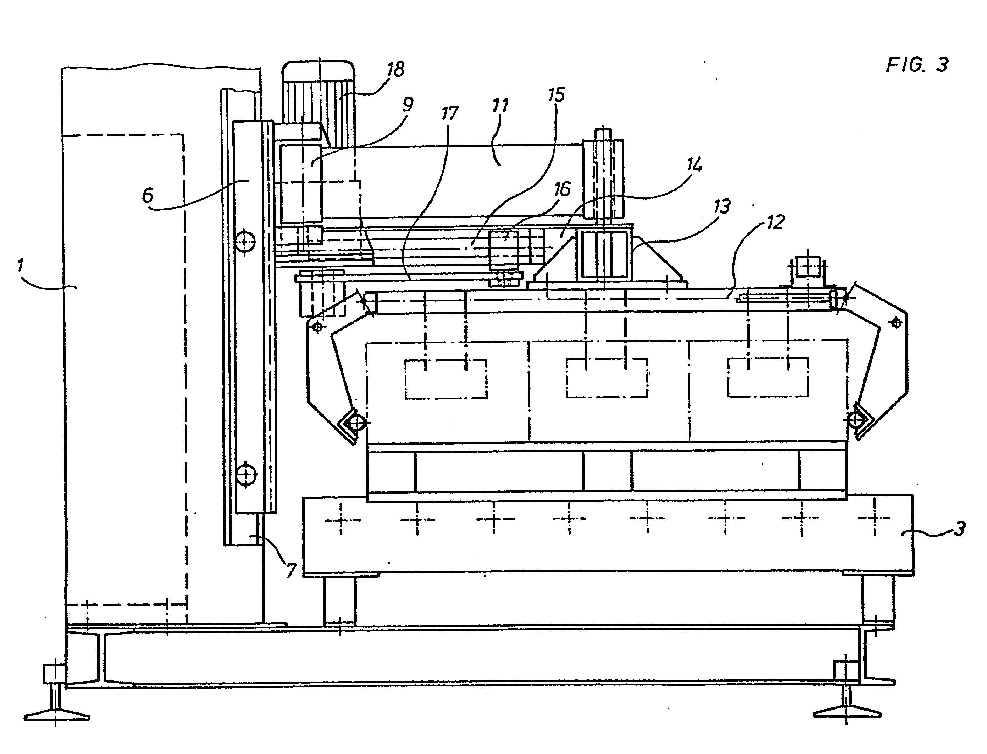

Gemäss dem in Fig. 1 dargestellten Ausführungsbeispiel besteht die als Palettenbe- und -entlademaschine ausgebildete Vorrichtung aus einer Hauptsäule 1, welcher einerseits eine Vollgutsammelstation 2 und Palettenbeladestation 3 und andererseits eine Leergutpalettenentladestation 4 mit Leergutauflösestation 5 zugerodnet ist. An der Hauptsäule 1 ist gemäss Fig. 1 beidseitig und entsprechend der weiteren Fig. 2 einseitig ein Hubgerüst 6 in vertikaler Ebene auf- und abfahrbar innerhalb von Führungen 7 gelagert. Vorzugsweise seitlich der eigentlichen Hauptsäule 1 sind Lagerstellen 8 und 9 vorgesehen, welche die eigentlichen Ausleger 10, 11 halten, die ihrerseits innerhalb eines vorbestimmbaren Winkelbereiches verschwenkbar sind und an ihren Enden eine die eigentliche Be- und/oder Entladeeinrichtung 12 aufnehmende Traverse 13 aufweisen. Diese Traverse 13 ist zusätzlich mit einem Tragelement 14 ausgestattet, welches eine Führung 15 aufweist, in welche ein Kurbelendstück 16 einer Kurbel 17 eingreift, die ihrerseits wiederum an dem auf- und abfahrbaren Hubgerüst 6 gelagert und mit einem Antrieb 18 ausgestattet ist. Die Be- und Entladeeinrichtung 12 ist innerhalb der durch die Endpunkte 19, 20 des Auslegers 10, 11 bestimmten Längenverhältnisse auswechselbar befestigt, so dass beliebige Variationsmöglichkeiten der zu fahrenden Kurve sowie der projektbezogenen Eingliederung einer solchen Maschine gegeben sind, wobei die Endpunkte ihrerseits wiederum exakt durch die Endstellungen der eigentlichen Schwingkurbel 17 bestimmt sind.

Die in Fig. 2 dargestellte Maschine ist als Linksausführung dargestellt, d.h., dass die Vollgutpalette in drei beliebigen Richtungen auslaufen kann, ohne dass irgendwelche Behinderungen durch Maschinenaggregate oder dgl. auftreten können. Insbesondere ist durch diese Anordnung der eigentlichen Be- und/oder Entladeeinrichtung 12 auch ein Auslauf der Vollpalette längs der Maschinenhauptsäule 1 möglich. Bei einer Ankopplung der Be- und Entladeeinrichtung 12 im Bereich des Auslegers 10 andererseits ergibt sich eine Rechtsausführung. Bei der in Fig. 1 dargestellten Ausführungsvariante ist zwischen der Leergutpalettenentladestation 4 und der Vollpalettenbeladestation 3 zusätzlich ein Palettenmagazin 22 eingegliedert, so dass unabhängig von der Entladeleistung des linken Maschinenteils 23 als Entpalettiermaschine die eigentliche Bepalettiermaschine 24 ungehindert arbeiten kann.

Mit dem Ausleger 11 bzw. der Traverse 13 korrespondiert ein zweiter Ausleger 10, dessen Aufgabe es ist, eine Parallelführung der Traverse 13 sicherzustellen. Anstelle dieses zusätzlichen Auslegers 10 ist es aber auch denkbar, im Bereich der Lagerstelle 9 auf Abstand und aufeinander gegenüberliegenden Seiten Parallelführungsgestänge zu lagern, die mit ihren freien Enden auf entsprechendem Abstand an der Haltetraverse befestigt ist, wodurch ebenfalls eine ausreichende Parallelführung gegeben ist. An der Traverse 13 befindet sich zusätzlich eine Führung 15, die mit dem Ende der Kurbel 17 korrespondiert, die ihrerseits wiederum etwa mittig des Hubgerüstes 6 gelagert und antreibbar ist. Diese Anordnung hat den Vorteil, dass bei Verschwenken der Kurbel 17 um etwa 180° die jeweiligen Endlagen des Auslegers 10 und damit eine exakte Positionierung der damit verbundenen Greifereinrichtung sichergestellt sind. In gleicher Weise wird eine entsprechend vorteilhafte Beschleunigungs- und Verzögerungsphase, die ein schonendes Umsetzen der jeweiligen Güter zulässt, erreicht.

Es ist vorstellbar, anstelle des gezeigten Schwenkgetriebes mit Antriebskurbel anderweitige Getriebe anzuordnen, die beispielsweise über Zahnkurbeln unmittelbar an der Lagerstelle des Auslegers 11 angreifen. Es können aber auch die Parallelführungsgestänge, beispielsweise der Ausleger 11 oder unmittelbar im Bereich der Lagerstelle 9 angeordnete Parallelführungsgestänge für den Angriff der nicht weiter dargestellten Antriebsvariante benutzt werden. Schliesslich ist es denkbar, im Bereich der Antriebskurbellagerung eine Schwenkkurbel vorzusehen, die in entsprechend ausgebildeten Führungen, die unmittelbar mit dem Ausleger 10 bzw. 11 befestigt sind, eingreift.

Bei der Verwendung der vorgeschlagenen Antriebsvorrichtung für eine Ein- oder Auspackmaschine für Kästen können diese Stationen als Kastenzulauf bzw. Flaschenzu- oder -ablauf vorgesehen sein.

Die an der Säule befindliche Belademaschine gemäss Fig. 1 arbeitet wie folgt:

Auf einem Kastenzulaufförderer 25 werden die zu palettierenden Vollgutkästen kontinuierlich herangefördert und quer zur eigentlichen Zulaufrichtung der Vollgutsammelstation 2 zugeleitet und entsprechend dem gewünschten Lagebild zusammengestellt. Zu diesem Zeitpunkt befindet sich im Bereich der Palettenbeladestation 3 eine Leerpalette. Sobald die komplette Lage bereitgestellt ist, fährt die Beladeeinrichtung 12 in ihre untere Position und nimmt die umzusetzende Stückgutlage 21 auf. Je nach den gegebenen Höhenverhältnissen zwischen Vollgutsammelstation 2 und Palettenbeladestelle 3 verfährt nun das Hubgerüst 6 mit der aufgenommenen Stückgutlage 21 in die erforderliche Höhenposition, wobei gleichzeitig der Antrieb 18 der Kurbel 17 in Tätigkeit gesetzt und ein Verschwenken der kompletten Einrichtung in Richtung Palettenbeladestation 3 vorgenommen wird. Im Anschluss daran wird die Stückgutlage abgesetzt. Dieser Vorgang mit Anfahren der unterschiedlichen Höhen der zu beladenden Vollgutpalette wiederholt sich so lange, bis diese mit der gewünschten Lagenanzahl beladen ist. Nunmehr kann die Vollgutpalette auslaufen. Entsprechend der hier beschriebenen Arbeitsweise verläuft der Entladevorgang einer Leergutpalette im Bereich der Leergutpalettenentladestation 4 und das Auflösen der Leergut-Stückgutlagen im Bereich der Leergutauflösestation 5, wobei diese Maschinen 23, 24 ungeachtet ihrer gemeinsamen Lagerung an nur einer Säule völlig unabhängig voneinander arbeiten können. Das Beispiel in Fig. 2 zeigt eine solche Maschine, die als Einzelmaschine im Rahmen der Erfindung ausgeführt ist und nur einseitig mit einem Hubgerüst 6 und den daran gelagerten Auslegern und Antriebselementen ausgestattet ist.

Zur Auf- und Abbewegung der Hubgerüste 6 sind am Kopf der Hauptsäule 1 beliebig ansteuerbare Getriebemotoren angesetzt, die über Kettenrändern und daran aufgehängten Ketten das eigentliche Hubgerüst 6 in vertikaler Ebene verfahren. Zum Ausgleich der aufgenommenen Gewichte befindet sich an dem Leertrum der Kette innerhalb der Hauptsäule 1 je ein separat geführtes Gegengewicht.

### Patentansprüche

1. Vorrichtung zum Be- und/oder Entpalettieren von Stückgütern wie Kisten, Kartons, Fassgebinden und/oder Be- oder Entladen von Kästen, bei der wenigstens ein Hubgerüst (6) an einer einzigen Hauptsäule (1) in vertikaler Ebene auf- und abverfahrbar gehalten ist, dadurch gekennzeichnet, dass:
— die Hauptsäule (1) unbeweglich ist,
— an dem Hubgerüst (6) in gleicher horizontaler Ebene auf Abstand zwei Lagerstellen (8, 9) für zwei parallel und horizontal verschwenkbare Ausleger (10, 11) vorhanden sind,
— eine die eigentliche Greifeinrichtung aufnehmende Traverse (13) an den von den Lagerstellen (8, 9) abweisenden Enden der beiden Ausleger (10, 11) derart drehbar gelagert ist, dass eine Parallelführung der Traverse (13) sichergestellt ist,
— an dem Hubgerüst (6) in der Mitte zwischen den Lagerstellen (8, 9) ein Kurbelantrieb (17, 18) gelagert ist, dessen Kurbel (17) in einer lotrecht zur Traverse verlaufenden Führung (15) eingreift.

2. Vorrichtung nach Anspruch 1, dadurch gekennzeichnet, dass aufeinander gegenüberliegenden Seiten der Hauptsäule (1) je ein Hubgerüst (6) einzeln und/oder gemeinsam verfahrbar angeordnet ist.

3. Vorrichtung nach den vorhergehenden Ansprüchen, dadurch gekennzeichnet, dass die Ausleger (10, 11) vorzugsweise gleiche Lastaufnahmeparameter aufweisen und die eigentliche Be- und/oder Entladeeinrichtung (12) an wahlweise mindestens zwei Zentrierpunkten der Traverse (13) ankuppelbar ist, derart, dass bei symetrischer Anordnung des Auslegersystems zur eigentlichen Hauptsäule (1) eine Links- bzw. Rechtsausführung mit entsprechend zugeordneten Paletten- und/oder Stückgutfahrwegen unter Verwendung gleicher Bauelemente wählbar ist.

4. Vorrichtung nach den vorhergehenden Ansprüchen, dadurch gekennzeichnet, dass die Kurbel (17) mit ihrem freien Ende an einer Kurbelhülsenführung der Traverse (13) in vertikaler Lastrichtung abgestützt ist.

5. Vorrichtung nach den vorhergehenden Ansprüchen, dadurch gekennzeichnet, dass die jeweilige Endstellung der Kurbel (17) die entsprechenden Endlagen der Greifeinrichtung bestimmt.

### Claims

1. Device for palletizing and/or depalletizing unit loads, such as crates, cartons and barrels, and/or for loading or unloading boxes, whereby at least one lifting frame (6) is retained on a single main column (1) so as to be upwardly and downwardly displaceable in a vertical plane, characterised in that:
— the main column (1) is non-displaceable;
— two bearing points (8, 9) are provided on the lifting frame (6) in the same horizontal plane with a spacing therebetween for two arms (10, 11) which are pivotable in parallel and horizontal directions;
— a crosspiece member (13), which accommodates the actual gripper means, is rotatably mounted on the ends of the two arms (10, 11) remote from the bearing points (8, 9) in such a manner that parallel guidance of the crosspiece member (13) is ensured;
— a crank drive (17, 18) is mounted in the middle of the lifting frame (6) between the bearing points (8, 9), the crank (17) of said crank drive engaging in a guide means (15) which extends perpendicularly relative to the crosspiece member.

2. Device according to claim 1, characterised in that a lifting frame (6) is disposed on each opposed side of the main column (1) so as to be individually and/or jointly displaceable.

3. Device according to the preceding claims, characterised in that the arms (10, 11) preferably have identical load bearing parameters, and the actual loading and/or unloading means (12) is selectively connectable to at least two centering points of the crosspiece member (13) in such a manner that, when the arm system is disposed symmetrically with the actual main column (1), a left-hand or right-hand movement is selectable with suitably associated routes for pallets and/or unit loads, utilising identical component parts.

4. Device according to the preceding claims, characterised in that the crank (17) is supported by its free end on a spherical sleeve guide means of the crosspiece member (13) in a vertical loading direction.

5. Device according to the preceding claims, characterised in that the particular end position of the crank (17) determines the corresponding end positions of the gripper means.

**Revendications**

1. Dispositif pour palettiser et/ou dépalettiser des marchandises en colis tels que des caisses, des cartons ou des fûts, et/ou pour charger et décharger des caisses, dans lequel au moins un bâti de levage (6) est maintenu avec possibilité de déplacement vers le haut et vers le bas dans le plan vertical sur une seule colonne principale (1), caractérsé en ce que:
— lal colonne principale (1) est fixe,
— deux points d'appui (8, 9), destinés à deux bras (10, 11) pouvant pivoter horizontalement et en parallèle, sont disposés à distance, dans le même plan horizontal, sur le bâti de levage (6),
— une traverse (13) recevant le dispositif de préhension proprement dit est montée rotative aux extrémités opposées aux points d'appui (8, 9) des deux flèches (10, 11), de telle sorte qu'un mouvement parallèle de la traverse (13) est garanti,

— une commande à manivelle (17, 18) est montée sur le bâti de levage (6) au milieu entre les points d'appui (8, 9), commande dont la manivelle (17) s'engage dans un guidage (15) s'étendant perpendiculairement à la traverse.

2. Dispositif selon la revendication 1, caractérsé en ce qu'un bâti de levage (6) est disposé sur chacun des côtés opposés de la colonne principale (1), les différents bâtis de levage pouvant être déplacés individuellement et/ou conjointement.

3. Dispositif selon les revendications précédentes, caractérsé en ce que les bras (10, 11) présentent de préférence des paramètres de port de charge identiques, et en ce que le dispositif de chargement et/ou de déchargement proprement dit (12) peut être accouplé au choix en au moins deux points de centrage de la traverse (13) de telle sorte que, le système de bras étant disposé symétriquement par rapport à la colonne principale (1) proprement dite, il est possible de choisir, en utulisant les mêmes éléments constructifs, une exécution à gauche ou a droite, avec des parcours de déplacement correspondants des palettes et/ou marchandises en colis.

4. Dispositif selon les revendications précédentes, caractérsé en ce que la manivelle (17) est soutenue par son extrémité libre, dans le sens vertical de charge, sur un guidage à douille sphérique de la traverse (13).

5. Dispositif selon les revendications précédentes, caractérsé en ce que la position finale de la manivelle (17) détermine à chaque fois les positions finales correspondantes de préhension.

FIG. 1

FIG 2

0 118 033

9

FIG. 3